# EUROPEAN PATENT SPECIFICATION

(11) **EP 2 010 354 B1**
(45) Date of publication and mention of the grant of the patent: **27.03.2013**
(21) Application number: 06751188.1
(22) Date of filing: 25.04.2006
(51) Int. Cl.: B23K 20/08, B23K 31/02

(54) **METHOD FOR FABRICATING LARGE DIMENSION BONDS USING REACTIVE MULTILAYER JOINING ; ASSEMBLY WITH REACTIVE SHEETS**
VERFAHREN ZUR HERSTELLUNG VON VERBINDUNGEN MIT GROSSEN ABMESSUNGEN UNTER VERWENDUNG VON REAKTIVEM MEHRSCHICHTFÜGEN ; VERBINDUNG VON REAKTIVEN BLECHEN
PROCEDE DE FABRICATION D'APPAREILS DE GRANDES DIMENSIONS PAR L'ASSEMBLAGE DE PLUSIEURS COUCHES REACTIVES ; ASSEMBLAGE DE FEUILLES REACTIVES

(43) Date of publication of application: 07.01.2009
(73) Proprietor: Reactive Nanotechnologies, Inc., Hunt Valley, MD 21030 (US)
(72) Inventor: DUCKHAM, Alan, Baltimore, Maryland 21218 (US); NEWSON, Jesse, E., Cockeysville, Maryland 21030 (US); BROWN, Michael, V., Endicott, New York 13760 (US); RUDE, Timothy, Ryan, Baltimore, Maryland 21231 (US); KNIO, Omar, M., Timonium, Maryland 21093 (US); HEIAN, Ellen, M., Cockeysville, Maryland 21030 (US); SUBRAMANIAN, Jai, S., Lutherville-timonium, Maryland 21039 (US)
(74) Representative: Lecomte, Didier
(86) International application number: PCT/US2006/015387
(87) International publication number: WO 2007/123530

(56) References cited:
- EP-A1- 0 445 997
- EP-A1- 0 553 592
- US-A- 3 364 561
- US-A- 3 624 237
- US-A- 3 663 723
- US-A- 5 471 092
- US-A1- 2001 038 029
- US-A1- 2005 082 343
- US-A1- 2005 121 499
- US-A1- 2005 136 270
- US-A1- 2005 142 495
- US-A1- 2006 035 034
- US-B2- 6 736 942

## Description

This invention relates to a method of joining bodies of material over bonding regions of large dimension using reactive composite materials such as reactive multilayer foils according to the preamble of claim 1 and to an assembly according to the preamble of claim 11 (sec, for example, US 2001/038029).

### Background Art

Reactive composite joining, such as shown in U.S. Patent No. 6,534,194 B2 to Weihs et al and in U.S. Patent No. 6,736,942 to Weihs et al*.* is a particularly advantageous process for soldering, welding, or brazing materials at room temperature. The process involves sandwiching a reactive composite material (RCM) between two layers of a fusible material. The RCM and the fusible material are then disposed between the two components to be joined, and the RCM is ignited. A self-propagating reaction is initiated within the RCM which results in a rapid rise in temperature within the RCM. The heat released by the reaction melts the adjacent fusible material layers, and upon cooling, the fusible material bonds the two components together.

Alternatively, depending upon the composition of the two components, the layers of fusible material are not used, and the reactive composite material is placed directly between the two components. Thermal energy released by ignition of the RCM melts material from the adjacent component surfaces and consequently joins the components.

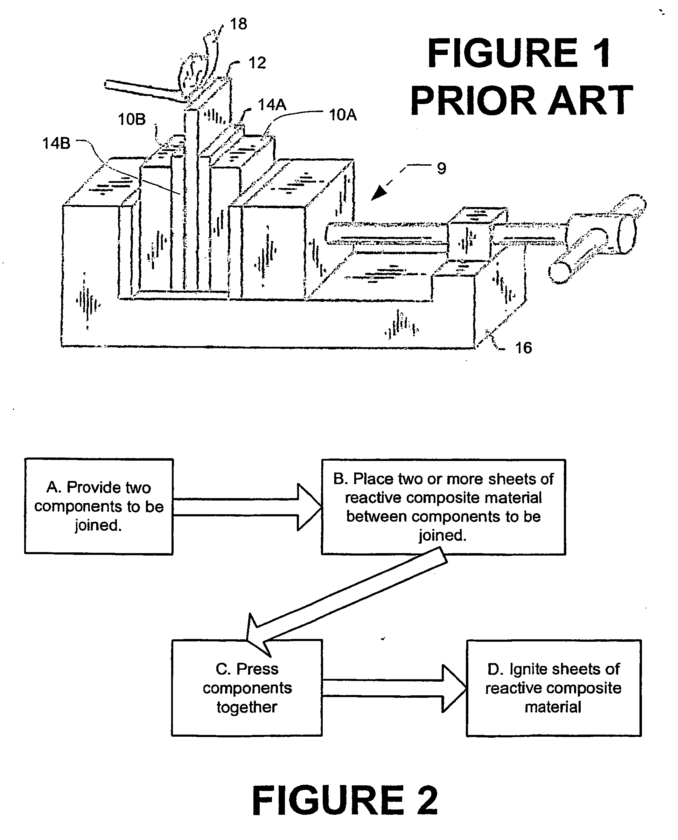

Turning to Figure 1, an arrangement 9 for performing the process of reactive composite joining of two components 10A and 10B is illustrated. A sheet or layer of reactive composite material 12 is disposed between two sheets or layers of fusible material 14A and 14B which, in turn, are sandwiched between the mating surfaces (not visible) of the components 10A and 10B. The sandwiched assembly is then pressed together, as symbolized by vise 16, and the reactive composite is ignited, as by match 18. The reaction propagates rapidly through the RCM 12, melting fusible layers 14A and 14B. The melted layers cool, joining the components 10A and 10B together. The RCM 12 is typically reactive multilayer foil, and the fusible materials 14A and 14B are typically solders or brazes.

The process of joining the two components 10A and 10B occurs more rapidly with a reactive composite joining process than with conventional joining techniques such as those which utilize furnaces or torches. Thus, significant gains in productivity can be achieved. In addition, with the very localized heating associated with the reactive composite joining process, temperature sensitive components, as well as dissimilar materials such as metals and ceramics, can be soldered or brazed without thermal damage. Fine-grained metals can be soldered or brazed together using a reactive composite joining process without grain growth, and bulk amorphous materials can be welded together with only a local excursion from room temperature, producing a high strength bond while minimizing crystallization.

The reactive composite materials 12 used in reactive composite joining process are typically nanostructured materials such as described in U.S. Patent No. 6,534,194 B2 Weihs et al*.* The reactive composite materials 12 are typically fabricated by vapor depositing hundreds of nano-scale layers which alternate between elements having large, negative heats of mixing, such as nickel and aluminum. Recent developments have shown that it is possible to carefully control both the heat of the reaction as well as the reaction velocity by varying the thicknesses of the alternating layers. It has also been shown that the heats of reaction can be controlled by modifying the foil composition, or by low-temperature annealing of the reactive multi-layers after their fabrication. It is further known that alternative methods for fabricating nanostructured reactive multilayers include mechanical processing.

Two key advantages achieved by the use of reactive composite materials for joining components are speed and the localization of heat to the joint area. The increased speed and localization are advantageous over conventional soldering or brazing methods, particularly for applications involving temperature-sensitive components or components with a large difference in coefficient of thermal expansion, such as occur in metal/ceramic bonding. In conventional welding or brazing, temperature-sensitive components can be destroyed or damaged during the process. Residual thermal stress in the components may necessitate costly and time-consuming operations, such as subsequent anneals or heat treatments. In contrast, joining with reactive composites subjects the components to little heat and produces only a very local rise in temperature. Generally, only the adjacent fusible layers and the adjoining surfaces of the components are heated substantially. Thus, the risk of thermal damage to the components is minimized. In addition, reactive composite joining is fast and results in cost-effective, strong, and thermally conductive joints.

While conventional reactive composite joining works well in joining components over lengths less than about 101.6 mm (four inches) and areas less than about 10 322 mm² (16 square inches), joining over larger lengths and areas presents particular challenges. It has been observed that for optimal joining it is advantageous that the surfaces to be joined be heated as uniformly, and as simultaneously, as possible. When the lengths and areas become larger, it is increasingly difficult to maintain the desired reaction simultaneity and uniformity from a single ignition point. In addition, larger joining region dimensions can exceed those of easily fabricated RCM's, requiring multiple pieces of reactive foil to cover the joint surface area. Even though the joining reaction spreads rapidly through the RCM, not every part of a large surface area joint area may be molten at the same time, possibly resulting in poor bonding between the components. Moreover, increasing the surface area to be joined presents increasingly stringent requirements for the uniform application of pressure to the components during the joining process.

Document EP 0 553 592 A1 discloses a method of manufacture having a multi-layer coating structure with desired wear/corrosion resistant matrix particles wherein seam areas formed by abutting of any two individual layers of the coating are staggered throughout the coating.

According to document US 2001/0038029 A1, a reactive foil may be positioned between joining materials to form a sandwich structure. The joining process involves the application of force to maintain the relative positions of bulk materials, joining materials and the reactive foil. Once the components of the joining process are positioned, the reactive foil can exothermically react by igniting the foil.

Accordingly, it would be advantageous to provide a reactive composite joining process for use in joining components over surface areas which are larger than the size of a single sheet of reactive composite material, and which result in a strong and relatively uniform bond between the component materials.

### Summary of the Invention

Briefly stated, the present invention provides a method for joining bodies of component material over regions of large dimensions by disposing a plurality of substantially contiguous RCM sheets between the component material bodies according to claim 1.

The present invention provides also an assembly according to claim 11.

In an embodiment of the present invention, a plurality of substantially contiguous RCM sheets disposed between component material bodies to be joined over a region of large dimension are coupled together by a bridging material. The bridging material may be in the form of a reactive foil, wire, layer, powder, or other material which is capable of conveying an ignition reaction from one sheet to another, either directly or by thermal conduction. The bridging material is reactive in response to an ignition of a first RCM sheet to ignite a second RCM sheet.

In an alternate embodiment of the present invention, a plurality of substantially contiguous RCM sheets disposed between component material bodies to be joined over a region of large dimension are coupled together by structural support tabs of fusible material to enable easy assembly, transport, and positioning of the multiple RCM sheets between the component bodies to be joined.

In the present invention, a plurality of substantially contiguous RCM sheets are disposed between component material bodies to be joined over a region of large dimensions, directly adjacent surfaces of the component material bodies to be joined.

In an alternate embodiment of the present invention, a plurality of substantially contiguous RCM sheets are disposed between component material bodies to be joined over a region of large dimensions. Sheets of fusible material such as solder or braze are disposed in proximity to the RCM sheets and to the component material bodies. The fusible material sheets can overlie, underlie, or sandwich the sheets of reactive composite materials. The fusible material sheets can be continuous across the boundaries of the contiguous RCM sheets, and may optionally function as connecting material to hold RCM sheets together.

A variation of the method of the present invention for joining bodies of component material over regions of large dimension disposes at least one RCM sheet between the component material bodies. At least one spacer plate is positioned between an external pressure source and the component bodies. Pressure is applied to the arrangement from the external pressure source, urging the component bodies towards each other to control the formation of a bond between the component bodies following initiation of an ignition reaction in the RCM sheets. The ignition reaction within the RCM sheets results in rapid localized heating of materials adjacent the sheets, which form a bond between the bodies of component material upon cooling.

### Brief Description of the Drawings

The advantages, nature and various additional features of the invention will appear more fully upon consideration of the illustrative embodiments now to be described in detail in connection with the accompanying drawings. In the drawings:
Figure 1 schematically illustrates a prior art arrangement for performing conventional reactive composite joining of two components;
Figure 2 is a block diagram representing the steps involved in joining two bodies by a large dimension joint in accordance with the invention;
Figure 3 is a top plan view of a plurality of contiguous reactive composite material sheets operatively connected by structural support tabs and ignition bridges within the bonding region for the formation of a large area bond between two component bodies;
Figure 4 is a top plan view of a plurality of contiguous reactive composite material sheets operatively connected by structural support tabs within the bonding region and ignition bridges external to the bonding region, for the formation of a large area bond between two component bodies;
Figure 5 schematically illustrates several contiguous reactive composite material sheets operatively connected by ignition bridges external to the bonding region for the propagation of an ignition reaction from sheet to sheet;
Figure 6 is a cross sectional view of a pair of contiguous reactive composite material sheets sandwiched between two layers of a fusible material;
Figure 7 is a block diagram representing an arrangement of components and layers for practicing a joining method of the present invention;
Figure 8 illustrates an exemplary arrangement for simultaneously igniting a plurality of reactive composite material sheets during formation of a bonding joint in accordance with a method of the present invention;
Figure 9 is a top-plan acoustic image of a large dimension joint formed in accordance with a method of the present invention;
Figure 10 is a top-plan acoustic image of a large dimension joint formed in accordance with an a method of the present invention, illustrating edge voids;
Figure 11 is a top-plan acoustic image of a large dimension joint formed in accordance with an optimized loading bonding method of the present invention;
Figure 12 illustrates an exemplary arrangement of contiguous reactive composite material sheets, fusible material support tabs, ignition bridges, and ignition points;
Figure 13 is a top-plan acoustic image of a large dimension joint resulting from the arrangement illustrated in Fig. 12;
Figure 14 illustrates an exemplary arrangement of contiguous reactive composite material sheets, fusible material support tabs, ignition bridges, and ignition points;
Figure 15 is a top-plan acoustic image of a large dimension joint resulting from the arrangement illustrated in Fig. 14;
Figure 16 is a block diagram representing a first exemplary arrangement of components and layers for practicing a joining method of the present invention; and
Figure 17 is a block diagram representing a second exemplary arrangement of components and layers for practicing a joining method of the present invention.

Corresponding reference numerals indicate corresponding parts throughout the several figures of the drawings. It is to be understood that the drawings are for illustrating the concepts of the invention and are not to scale.

### Best Modes for Carrying Out the Invention

The following detailed description illustrates the invention by way of example and not by way of limitation. The description enables one skilled in the art to make and use the invention, and describes several embodiments, adaptations, variations, alternatives, and uses of the invention, including what is presently believed to be the best mode of carrying out the invention.

As used herein, the phrase "large dimension" is used to describe a joint or bonding region and is understood to mean a joint or bonding region having either an area or length which exceeds the area or length of a single sheet of reactive composite material utilized in the joining processes, which is sufficiently large enough that a single propagation wave front from an ignition reaction within a sheet of reactive composite material fails to achieve desired bond characteristics throughout the bonding region, or which exhibits a loading variation between the center and the edges of the joint or bonding region. For example, an area of at least 10 322 mm² (16.0 sq. inches) or a length of at least 101.6 mm (4.0 inches) is considered to be a large dimension when utilizing a sheet of reactive composite material having an area of less than 10 322 mm² (16.0 sq. inches) and a longest dimension of less than 101.6 mm (4.0 inches).

As used herein, the phrase "reactive composite material" or "RCM" is understood by those of ordinary skill in the art to refer to structures, such as reactive multilayer foils, comprising two or more phases of materials spaced in a controlled fashion such that, upon appropriate excitation or exothermic reaction initiation, the materials undergo an exothermic chemical reaction which spreads throughout the composite material structure. These exothermic reactions may be initiated by electrical resistance heating, inductive heating, laser pulses, microwave energy, or ultrasonic agitation of the reactive composite material at one or more ignition points.

Referring to the drawings, Figure 2 illustrates a generalized flow diagram of the steps involved in joining together two component bodies 10A and 10B over a joint or bonding region having a large dimension (large area or large length), using at least two contiguous sheets 12 of reactive composite material. Initially, as shown in block A, two component bodies 10A and 10B to be joined over substantially conforming large dimension mating surfaces are provided. The two component bodies 10A and 10B may be coated in advance with one or more layers of a fusible material 14A and 14B, such as a solder or braze alloy, or one or more sheets of the fusible material 14A and 14B may be placed between the component bodies 10A and 10B. The component bodies 10A and 10B may comprise the same type of materials, such as brass, or may be of different types of materials, such as nickel and brass, aluminum and titanium, boron carbide and steel, boron carbide and copper, silicon carbide and aluminum, and a tungsten-titanium alloy and a copper-chromium alloy.

Next, according to the present invention, as shown in Block B, two or more sheets 12 of reactive composite material in a substantially contiguous arrangement are disposed between the mating surfaces of the two component bodies 10A and 10B. As used herein and, according to the present invention the term "contiguous" is understood by those of ordinary skill in the art to mean that any adjacent edges of the sheets 12 of reactive composite material are arranged as close together as necessary to form a substantially void-free bond and at least sufficiently close together such that adjacent sheets 12 of reactive composite material can be operatively connected together into a single assembly. Contiguous RCM sheets do not need to be in physical contact with each other.

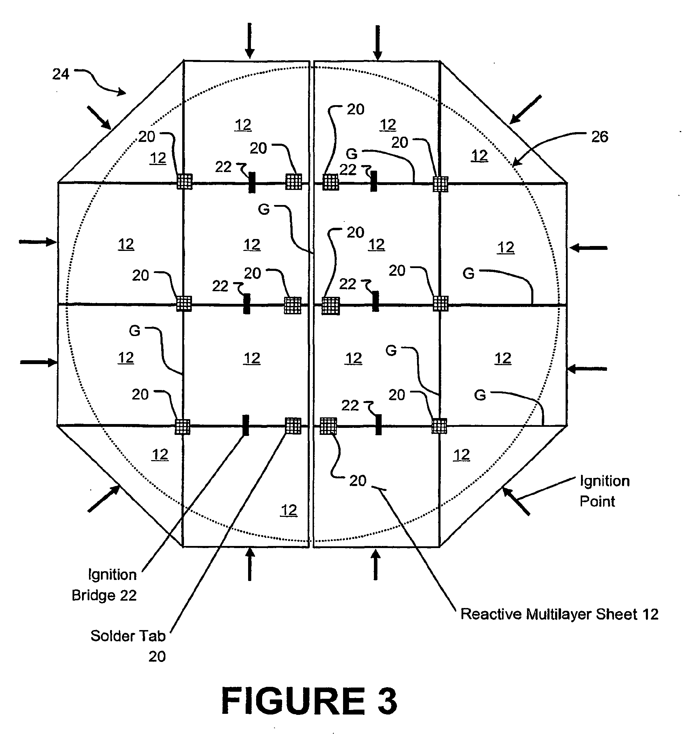

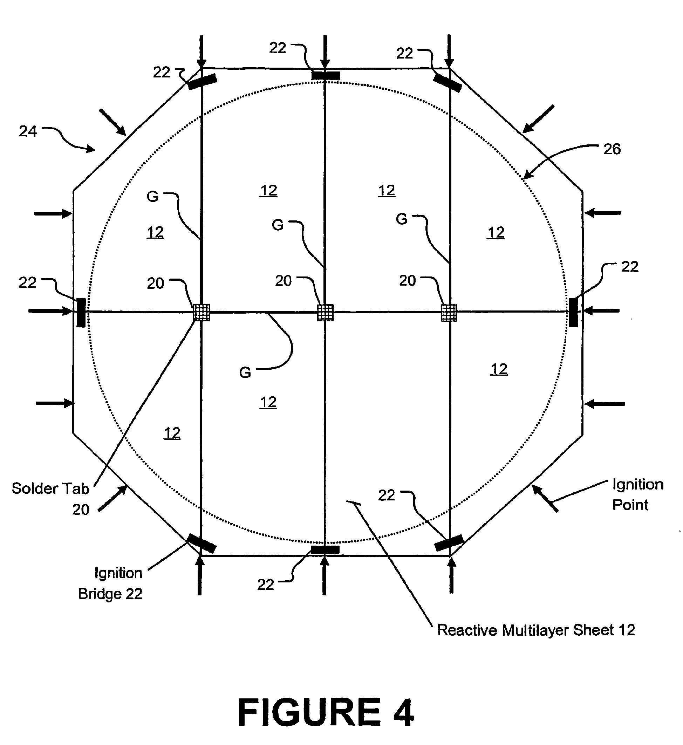

To operatively connect adjacent RCM sheets 12, a number of structurally supporting bridges or tabs 20 are formed between the sheets 12 (as shown in Figures 3 and 4). The bridges or tabs may be formed from either a fusible material 20 which will form part of the bond between the component bodies 10A and 10B, or may be formed from reactive material 22 which is capable of conveying an ignition reaction between adjacent sheets of RCM. Using the bridges or tabs 20, 22, two or more adjacent RCM sheets 12 are secured together in an assembly 24 in such a way as to maintain the relative positions to each other during assembly, transport, and positioning between the matching surfaces of the component bodies 10A and 10B in the large dimension bonding region.

A structural support bridge or tab 20 can be in any one of several forms to secure contiguous RCM sheets 12 together in the assembly 24. In one exemplary embodiment, the structural support bridges or tabs 20 are in the form of a soft metal or fusible material sheet, for instance indium, which is cold-pressed or rolled onto the RCM sheets 12.

An ignition bridge or tab 22 formed from a reactive material is preferably selected such that it will either ignite or conduct thermal energy between the adjacent sheets 12 to enable a reaction initiated in a first sheet 12A to continue via the bridge or tab to the adjacent sheet 12B. The configuration of an ignition bridge or tab 22 can be in any one of several forms to assist propagation of reaction between contiguous RCM sheets 12. For example, the ignition bridge or tab 22 can be in the form of a reactive multilayer foil, similar or identical to that used for the RCM sheets 12, or a thin wire that contains regions or layers of materials with a large negative heat of mixing. These configurations of the ignition bridges or tabs 22 can be attached to one or both contiguous sheets 12 with a small amount of glue or with a small piece of fusible solder. In addition to conveying an initiated reaction, ignition bridges or tabs 22 may be structural in nature, i.e. providing structural support to an arrangement of sheets 12 of RCM, or may be non-structurally supporting in nature, For example, a non-structurally supporting ignitable bridge 22 can be in the form of a loose or compact powder mixture of materials with a large negative heat of mixing.

Advantageously, the various forms of both bridges and tabs 20, 22 are small in comparison to the size of the RCM sheets 12, and do not interfere with the flow of any fusible material present in the bonding region, or with the flatness of the component body mating surfaces during the joining process.

Turning to Figure 3, an exemplary arrangement of a plurality of contiguous RCM sheets 12 are shown arranged and connected by solder assembly tabs 20 and ignitable bridges 22 to form a reactive composite material sheet assembly 24 covering a large area bonding region 26 between two component bodies (not shown). In the arrangement shown in Figure 3, both the solder assembly tabs 20 and the ignitable bridges 22 are contained within the large area bonding region 26. The arrows arranged about the periphery of the assembly 24 indicate a plurality of ignition or reaction initiation points associated with the assembly 24.

Figure 4 illustrates a second exemplary arrangement of a plurality of contiguous RCM sheets 12 arranged and connected by solder assembly tabs 20 and ignitable bridges 22 to form a reactive composite material sheet assembly 24 covering a large area bonding region 26 between two component bodies (not shown). In the arrangement shown in Figure 4, the solder assembly tabs 20 are contained within the large area bonding region 26, while the ignitable bridges 22 are disposed outside the large area bonding region 26. By disposing the ignitable bridges 22 outside of the large bonding region 26, the ignitable bridges 22 may be attached to the sheets 12 of the assembly 24 with tape or other means that would not be possible within the large area bonding region. The bridges may thus be used for securing the sheets 12 within the assembly 24, as well as for ignition of the bonding reactions, as is indicated by the arrows arranged about the periphery of the assembly 24 to indicate a plurality of ignition or reaction initiation points.

Within a large area bonding region 26, the solder tabs 20 may be secured to the sheets 12 of the assembly 24 by pressing or with a minimal amount of glue. If it is undesirable to use a solder material for the tabs 20 which differs from the solder material used as a fusible material within the joint, due to concerns about alloying, small tabs of the desired solder could be glued to the reactive sheets, preferably minimizing the amount of glue.

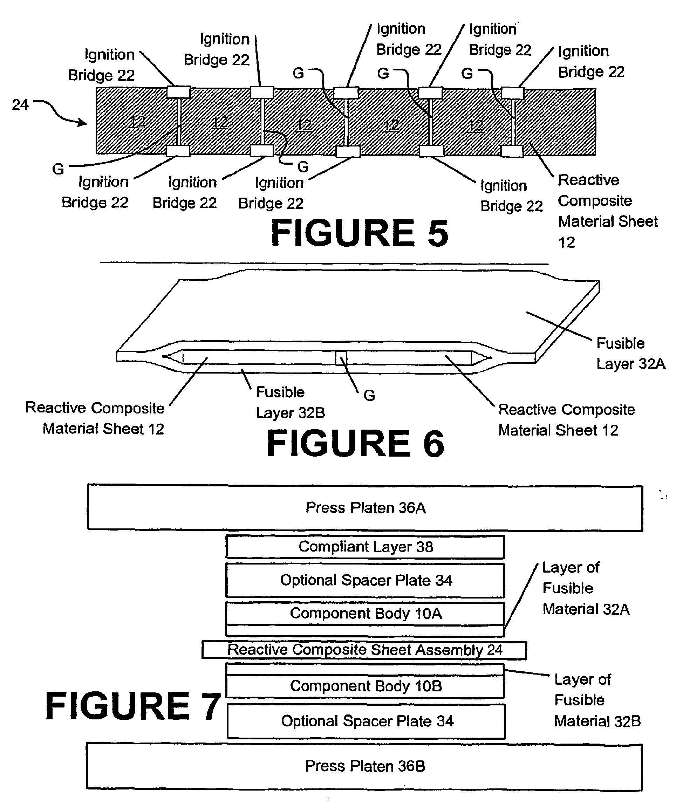

Figure 5 illustrates a third exemplary arrangement of a plurality of contiguous RCM sheets 12 arranged and connected by solder assembly tabs 20 and ignitable bridges 22 to form an RCM sheet assembly 24 covering a large linear dimensioned bonding region 30 between two component bodies (not shown). The ignitable bridges 22 may be attached to the reactive sheets 12 with glue or small pieces of solder material if they are disposed inside a joint region, or with adhesive tape if they are disposed outside a joint region.

Those of ordinary skill in the art will recognize that the number of RCM sheets 12 comprising the various assemblies 24 shown in Figures 3, 4, and 5 may be varied depending upon the size and configuration of the large area bonding region 26 or large linear dimensioned bonding region 30. Preferably, RCM sheets 12 are arranged within the assemblies 24 such that the gaps G between adjacent sheets 12 are as far to the interior of the bonding region as possible, particularly gaps G which are parallel to the edges of the bonding region. Similarly, it will be recognized that the placement and number of tabs 20 and ignition bridges 22 may be varied depending upon the particular application and geometry of the assembly 24, provided that the assembly 24 is secured in a stable configuration during placement in the bonding region, and that reactions can propagate between the sheets 12 of the assembly 24 in a generally rapid and uniform manner.

In lieu of assembly tabs 20, an assembly 24 of two or more RCM sheets 12 with ignition bridges 22 may be packaged as shown in Figure 6 between layers 32A and 32B of a fusible material, such as a solder or a braze. Such packaging allows the fusible material layers 32A and 32B and the assembly 24 of RCM sheets 12 to be handled as a unit, aiding in placement within a bonding region. The RCM sheets 12 may be bonded to the fusible material layers 32A and 32B by rolling, pressing, or other suitable means to ensure that the packaging remains structurally secure.

Once the assembly 24 is formed, with or without fusible layers 32A and 32B, it is disposed within the bonding region 26 between the components 10A and 10B to be joined. As shown in Block C of Figure 2, the components 10A and 10B to be joined are pressed together to provide a generally uniform pressure over the bonding region 26. A variety of devices and techniques may be utilized to achieve the generally uniform pressure between components 10A and 10B over the bonding region 26, for example, hydraulic or mechanic presses. As is shown in Figure 7, the components 10A and 10B may be disposed with suitable spacers 34 between a pair of press platens 36A and 36B. The selection of the spacers 34, and their effect on the resulting bond formed within the bonding region 26 are described below in further detail. An optional compliant layer 38, such as a rubber sheet, may be placed in the component arrangement between one component 10A or 10B and an adjacent press platen to accommodate any imperfections on the outside surfaces of the components 10A and 10B and the surfaces of the press platens 36A and 36B during the joining process. Pressure is exerted on the press platens 36A and 36B by any suitable means, such as by a hydraulic press with automatic pressure control.

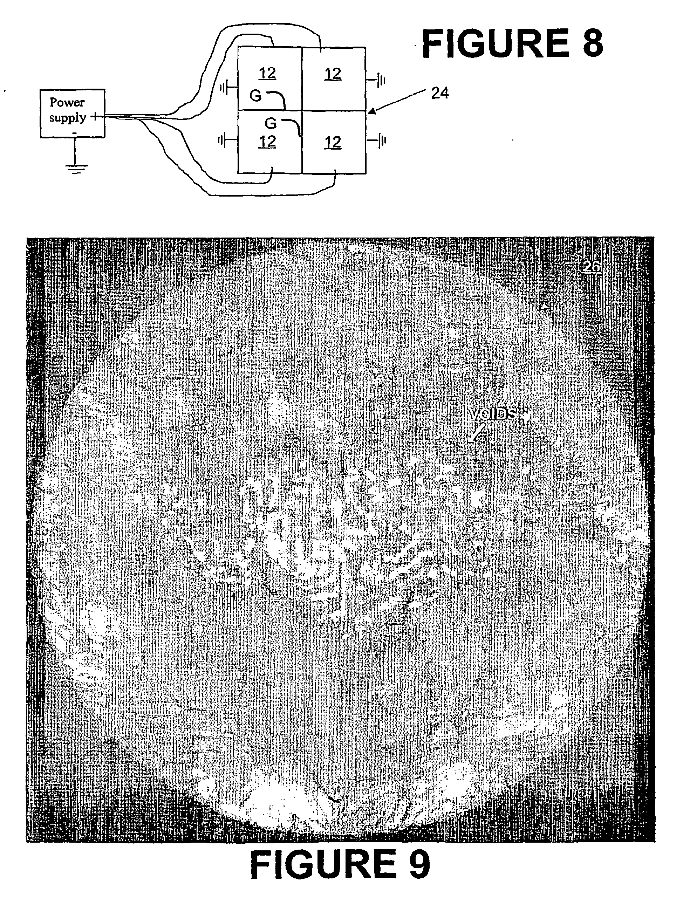

The final step, shown in Block D of Figure 2, is to ignite the RCM sheets 12 comprising the assembly 24. When bonding large areas, it is advantageous to symmetrically ignite the RCM sheets 12 at multiple points about the peripheral edge of the assembly 24, such as illustrated by the ignition point arrows in Figures 3 and 4. Interior sheets 12 which do not have edges outside the bonding region 26 are then ignited by the propagation of the reaction across the ignition bridges 22 within the assembly 24 as discussed previously. Simultaneous ignition of the sheets 12 in an assembly 24 is, according to the present invention, conveniently effected by simultaneous application of an electrical impulse, such as shown in Figure 8, or by laser impulse, induction, microwave radiation, or ultrasonic energy.

Those of ordinary skill in the art will recognize that a variety of devices which are capable of simultaneous delivery of ignition energy to the ignition points may be used. For example, an electrical circuit consisting of a capacitor and a switch associated with each ignition point may be employed. All the switches are controlled by a master switch, such that the capacitors charge and discharge simultaneously. An electrical pulse travels from the capacitors, through the switches to the ignition points on the RCM sheets 12, and to an electrical ground through the press platens 36A and 36B, igniting the sheets 12 within the assembly 24 and ultimately forming the bond between components 10A and 10B. Alternatively, a single large capacitor and switch may be connected to all the ignition points in parallel, such that energy is discharged to all ignition points about the assembly 24 simultaneously from the capacitor to ignite each sheet 12.

During the bonding process, it is known that non-uniform load distribution between the component bodies 10A and 10B will result in poor quality bonds with the presence of air gaps (voids) following the ignition of the sheets 12 within the assembly 24. Uneven load distribution typically results when the press platens 36A and 36B of the loading mechanism are significantly oversized or undersized compared to the size of the bonding region 26. This problem may be exacerbated when one or both of the components 10A and 10B to be joined are relatively thin. In the case where the press platens 36A and 36B are oversized relative to the size of the bonding region 26, the resulting pressure near the peripheral edges of the bonding region 26 is greater than the pressure near the center of the bonding region 26, and thus voids may form near the center of the bonding region 26. This is illustrated by the white regions visible near the center of the top-plan ultrasonic acoustic image or C-scan of a bonding region 26 shown in Figure 9.

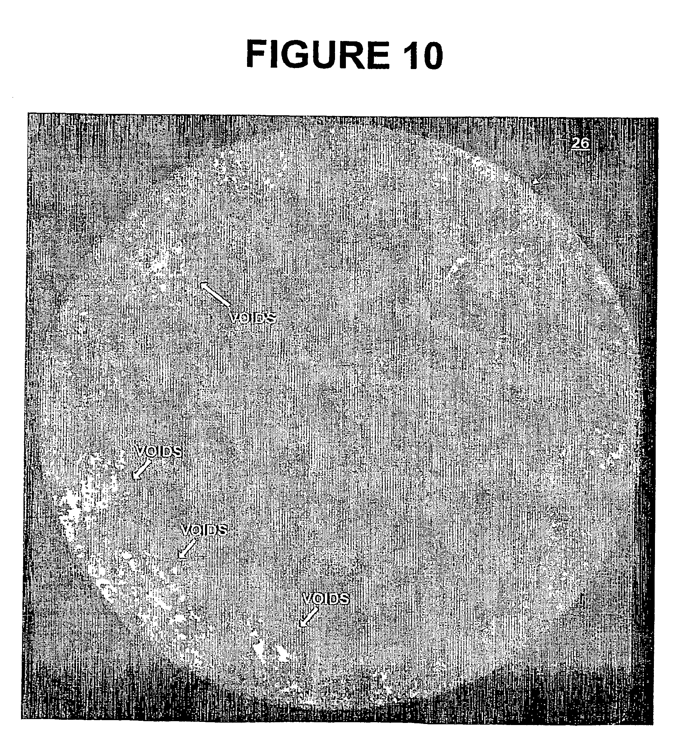

Conversely, in the case where the press platens 36A and 36B are undersized relative to the bonding region 26, the pressure near the center of the bonding region is greater than the pressure near the peripheral edges of the bonding region 26, and thus voids may appear about the peripheral edge as is shown by the white regions visible about the peripheral edges of the top-plan ultrasonic acoustic image or C-scan of a bonding region 26 shown in Figure 10.

In order to distribute the load from the press platens 36A and 36B in a uniform manner to the bonding region 26, one or more spacer plates 34 sized to match the bonding region 26 are placed between the components 10A, 10B, and the platen or platens 36A, 36B. The ideal thickness for the spacer plate or plates 34 may be determined by a sequential process, in which a test bond is initially formed without the use of any spacer plate or plates 34. The resulting bond between components 10A and 10B is evaluated to identify the presence of voids. For applications where the press platens 36A and 36B are larger than the bonding region 26, the bond quality may be characterized by a ratio of voided area in the center quarter of the bonding region 26 to the total area of the bonding region. To reduce the voided area, spacer plates 34 of increasingly greater thickness are employed in additional bonding test procedures between components 10A and 10B until the desired ratio of voided areas to bonding region area is achieved for a bonding procedure. Preferably, the thickness of the spacer plates 34 is doubled between each bonding test procedure until the desired ratio is achieved.

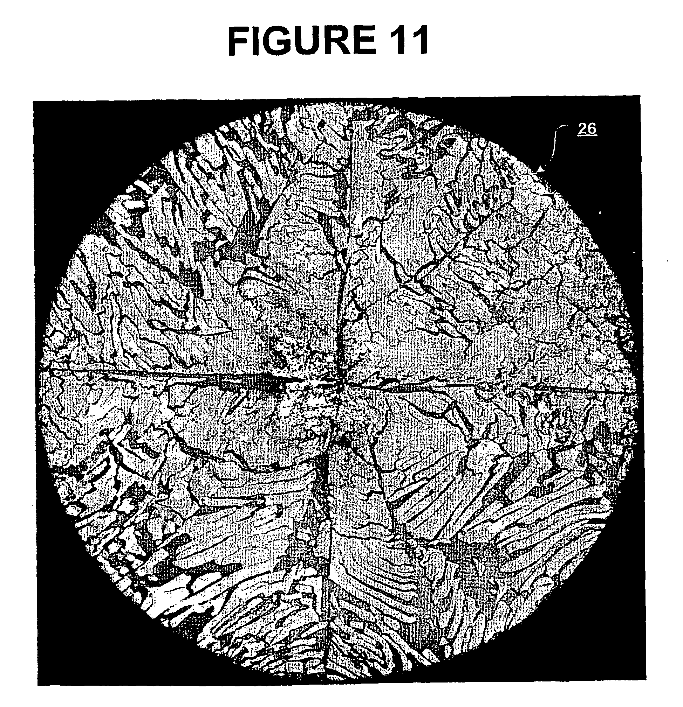

The procedure may be modified for large area joining applications where none or only a limited number of edge voids can be tolerated. For these applications the percentage of edge voids, defined as the ratio of voided area in the outer quarter of the bonding region 26 to the total joining area, may be tracked as described above. If the process of doubling the spacer plate thickness results in an acceptable percentage of center voids and no edge voids, then the optimal spacer plate thickness has been derived. If on the other hand, the process results in an acceptable percentage of center voids, but some percentage of edge voids are detected, then the spacer plate thickness should be reduced to the average thickness of the present and previous spacer plate thicknesses. This process is repeated until a spacer plate 34 having a determined thickness results in the minimum amount of center voids and the desired amount of edge voids. This is illustrated by the small white region near the center and the general lack of any white regions visible near the peripheral edges of the top-plan ultrasonic acoustic image or C-scan of a bonding region 26 shown in Figure 11.

For applications where the press platens 36A and 36B are undersized relative to the bonding region 26, the bond quality may be characterized by a ratio of voided area in the outer quarter of the bonding region 26 to the total area of the bonding region. To reduce the voided area, spacer plates 34 of increasingly greater thickness are employed in additional bonding test procedures between components 10A and 10B until the desired ratio of voided areas to bonding region area is achieved for the bonding procedure. Preferably, the thickness of the spacer plates 34 is doubled between each bonding test procedure until the desired ratio is achieved.

The methods of the present invention for joining component bodies 10A and 10B over a large dimension bonding region 26 are further illustrated by the following six examples.

Example 1: In this example, reactive or ignition bridges 22 and assembly tabs 20 were disposed on an assembly 24 inside the peripheral edges of a bonding region 26 as is illustrated in Figure 3. As shown in the general arrangement of Figure 7, the various components were assembled between press platens 36A and 36B, with the bonding region 26 to be formed between a nickel disk component 10A of 5.08 mm thickness (0.2 in.) and a brass disk component 10B of 15.25 mm thickness (0.6 in.). The bonding region 26 was circular, with an outer diameter of 449.58 mm (17.7 in.) and an area of 158 709 mm² (246 sq. inches). Layers of fusible material 32A and 32B, such as tin-lead solder, were pre-applied to the nickel and brass bodies 10A and 10B. To provide coverage for the bonding region 26, a total of sixteen RCM sheets 12 (Ni-Al, 80µm thick, reaction velocity 7m/s) were pre-assembled as an assembly 24 as shown in Figure 3, by pressing a total of twelve indium solder tabs 20 across the gaps G. To ensure reaction propagation across the gaps G, six reactive foil ignition bridges 22 were attached across gaps G within the bonding region 26. Small pieces of indium solder were additionally used to affix the reactive foil ignition bridges 22 to the RCM sheets 12.

The brass disk 10B was placed on a flat surface with the pre-applied layer of tin-lead solder 32B facing upwards. The portions of the assembly 24 were positioned adjacent to each other with a minimum separation gap G on top of the brass disk 10B so that they completely covered the bond region 26. The nickel disk 10A was placed above the reactive multilayer foil with the pre-applied layer of tin-lead solder 32A facing down, in contact with the RCM sheets 12 (Ni-Al, 80µm thick, reaction velocity 7m/s) in the assembly 24. An aluminum spacer plate 34 19.05 mm thick (0.75 inches), with a diameter of 449.58 mm (17.7 inches), was positioned above and aligned with the nickel disk 10A. The spacer thickness was previously determined using the process described above, by making several joints with different sized spacer plates. A thin layer of hard rubber 38, with a matching surface area, was placed above the aluminum spacer plate 34 to accommodate any imperfections on the outside surfaces of the brass and nickel disks 10A and 10B, and the surfaces of the platens of the press 36A, 36B used to apply a load during joining. The entire arrangement was transferred to a hydraulic press, where a load of 476 000 N (107,000 lbs) was applied to the arrangement. The sheets 12 of the assembly 24 were then ignited electrically, simultaneously at twelve ignition points around the circumference identified by the arrows in Figure 3, resulting in the bonding of the component bodies 10A and 10B to each other.

Example 2: In this example, assembly tabs 20 were disposed on an assembly 24 inside the peripheral edges of a bonding region 26, while the reactive or ignition bridges 22 were disposed outside the peripheral edges of the bonding region 26, as is illustrated in Figure 4. As shown in the general arrangement of Figure 7, the various components were assembled between press platens 36A and 36B, with the bonding region 26 to be formed between a nickel disk component 10A of 5.08 mm thickness (0.2 in.) and a brass disk component 10B 15.25 mm thick (0.6 in.) The bonding region 26 was circular, with an outer diameter of 449.58 mm (17.7 in.) and an area of 158 709 mm² (246 sq. inches). As with Example 1, above, layers of fusible material 32A and 32B, such as tin-lead solder, were pre-applied to the nickel and brass bodies 10A and 10B. To provide coverage for the bonding region 26, a total of eight RCM sheets 12 were pre-assembled as an assembly 24 as shown in Figure 4, by pressing a total of three indium solder tabs 20 across the gaps G. To ensure reaction propagation across the gaps G, eight reactive foil ignition bridges 22 were attached across gaps G outside the bonding region 26. Small pieces of high temperature tape (Kapton®) were used to provide adhesion between the ignition bridges 22 and the RCM sheets 12, and to further serve the purpose of providing structural support to the assembly 24.

Next, the brass disk 10B was placed on a flat surface with the pre-applied layer of tin-lead solder 32B facing upwards. The portions of the assembly 24 were positioned adjacent to each other with a minimum separation gap on top of the brass disk 10B so that they completely covered the bond region 26. The nickel disk 10A was placed above the reactive multilayer foil with the pre-applied layer of tin-lead solder 32A facing down, in contact with the RCM sheets 12 in the assembly 24. An aluminum spacer plate 34 19.05 mm thick (0.75 inches), with a diameter of 449.58 mm (17.7 inches), was positioned above and aligned with the nickel disk 10A. The spacer thickness was previously determined using the process described above, by making several joints with different sized spacer plates. A thin layer of hard rubber 38, with matching surface area, was placed above the aluminum spacer plate 34 to accommodate any imperfections on the outside surfaces of the brass and nickel disks 10A and 10B, and the surfaces of the platens of the press 36A, 36B used to apply a load during joining. The entire arrangement was transferred to a hydraulic press, where a load of 476 000 N (107,000 lbs) was applied to the arrangement. The sheets 12 of the assembly 24 were then ignited electrically, simultaneously at sixteen ignition points around the circumference identified by the arrows in Figure 4, resulting in the bonding of the component bodies 10A and 10B to each other.

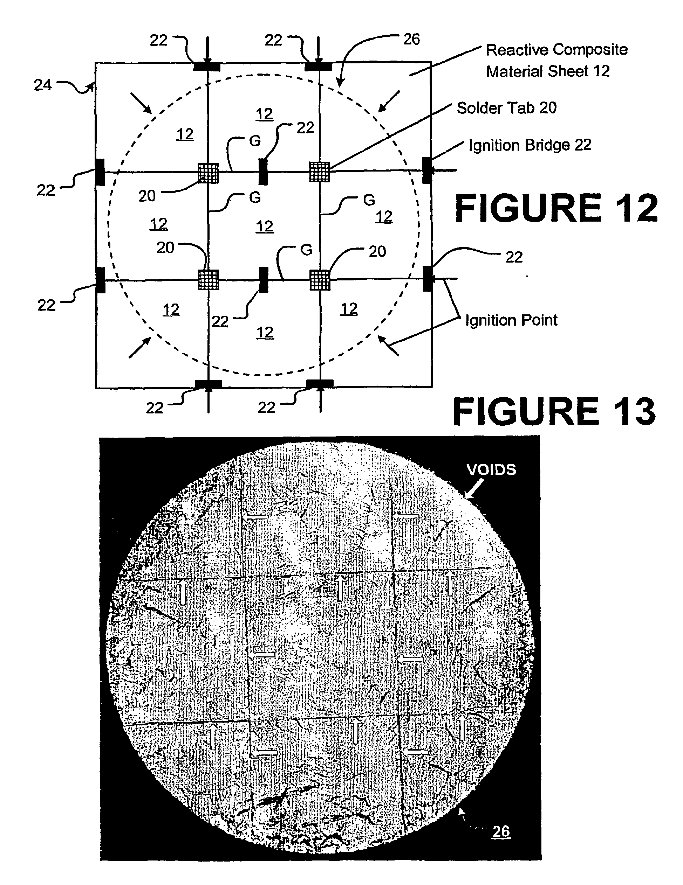

Example 3: In this example, assembly tabs 20 and ignition bridges 22 were disposed on an assembly 24, both inside and outside of the peripheral edges of a bonding region 26, as is illustrated in Figure 12. Component bodies 10A and 10B consisting of a 7.62 mm thick (0.3") copper alloy disk (10A) and a 12.7 mm thick (0.5") copper alloy disk (10B) were arranged with the assembly 24 in the bonding region 26, according to the general arrangement shown in Figure 7. The bonding region 26 was circular, with a diameter of 330.2 mm (13 inches) and an area of 85 806 mm² (133 sq. inches). Tin-lead solder was used as the fusible material layers 32A and 32B. Nine RCM sheets 12 were pre-assembled in the assembly arrangement 24 shown in Figure 12 by pressing four indium solder tabs 20 across sheet gaps G. To ensure reaction propagation across the sheet gaps G, ten reactive ignition bridges 22 were attached at critical boundaries, two within the bonding region 26 and eight outside the bonding region 26. The various components were arranged as shown in Figure 7 with the 12.7mm (0.5") copper disk 10B at the bottom, but with no optional spacer plate 34 below it, then the assembly 24 was positioned within the bonding region 26, and then the 7.62 mm (0,3") copper disk 10A placed on top. An aluminum spacer plate 34 was positioned above, and aligned with, the 7.62 mm thick (0.3") copper disk 10A. A thin layer of stiff foam, with a matching surface area dimension served as the compliant layer 78. The entire arrangement was transferred to a hydraulic press and a load of 257 000 N (57,850 lbs) was applied to the assembly 24 by the press. The RCM sheets 12 were ignited electrically, simultaneously at twelve points evenly spaced around the circumference, as indicated by the arrows in Figure 12, to initiate the bond forming reaction.

The resulting joined assembly was ultrasonically (acoustically) scanned to determine the quality of the bond. A representative acoustic scan is shown in Figure 13, with areas of poor bond quality including trapped air, know as voids, displayed as bright white regions adjacent the peripheral edge of the bonding region 26. The void content, measured as a percentage of the total bond area, is less than 1%, indicating a high quality bond. Dark lines in Figure 13 indicate cracks or gaps between individual sheets of reactive composite material that have been filled in by molten solder during the joining process. The non-straight dark lines are due to cracking of individual sheets of the reactive composite material which occurs during joining due to volume contraction of the sheets as they react. The filled gaps between individual pieces of reactive multilayer foil are straight lines and reveal the pattern of individual sheets of the reactive composite material that were pre-assembled into the assembly 24 prior to joining.

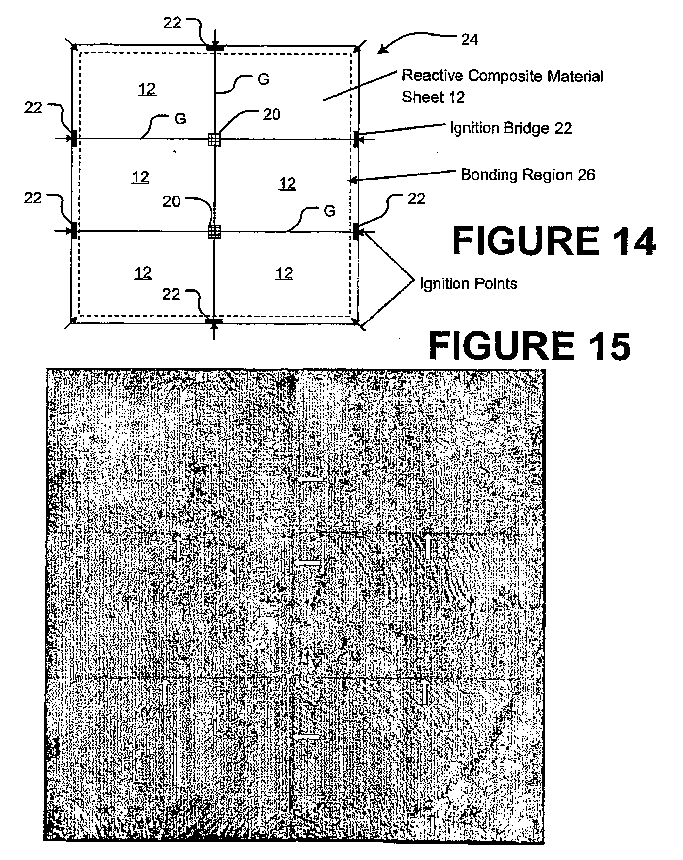

Example 4: In this example, an assembly 24 of RCM sheets 12 is arranged with assembly tabs 20 disposed within a square bonding region 26, and with ignition bridges 22 outside of the peripheral edges of the square bonding region 26, as is illustrated in Figure 14. The components 10A and 10B to be bonded consist of a square plate 10A of aluminum 12.7 mm thick (0.5") and a square plate 10B of titanium-aluminum-vanadium alloy 12.7 mm thick (0.5"). The bonding region 26 defines a square with sides 12 inches long and an area of 92 903 mm² (144 sq. inches). A tin-silver solder was used to provide fusible layers 32A and 32B on the two component bodies 10A, 10B. Six equal sized RCM sheets 12 were pre-assembled in the pattern shown in Figure 14 by pressing two indium solder tabs 20 across gaps G between the sheets 12. To ensure reaction propagation across the gaps G, six reactive multilayer foil ignition bridges 22 were attached at critical boundaries outside the bonding region 26. As shown in the general arrangement of Figure 7, a square spacer plate 34 of aluminum, 12.7 mm thick (0.5 inches) with 12 inch sides was placed on a flat surface. The titanium alloy component body 10B, reactive multilayer foil assembly 24, and aluminum component body 10A were then placed on top of the spacer plate 34. A second square aluminum spacer plate 34 of the same dimension as the first spacer plate, was positioned above, and aligned with, the aluminum component body 10A. A thin layer of hard rubber disposed above the second spacer plate 34 served as a compliant layer 38. The entire assembled arrangement was transferred to a hydraulic press and a load of 279 000 N (62,640 lbs) was applied to the assembled arrangement by the press platens 36A and 36B. The RCM sheets 12 were ignited electrically, simultaneously at ten points evenly spaced around the circumference, indicated by arrows in Figure 14, resulting in a bonding reaction between the component bodies 10A and 10B.

The resulting joint between the component bodies 10A and 10B was ultrasonically scanned to determine the quality of the bond. An acoustic scan is shown in Figure 15. The void content, measured as a percentage of the total bond area, is less than 1%, indicating a high quality bond. The dark horizontal and vertical lines in Figure 15 indicate gaps between individual RCM sheets 12 that have been filled by molten solder during the joining process. Thus from the ultrasonic C-scan it can clearly be observed that six sheets of reactive composite material effectively joined the two component bodies 10A and 10B.

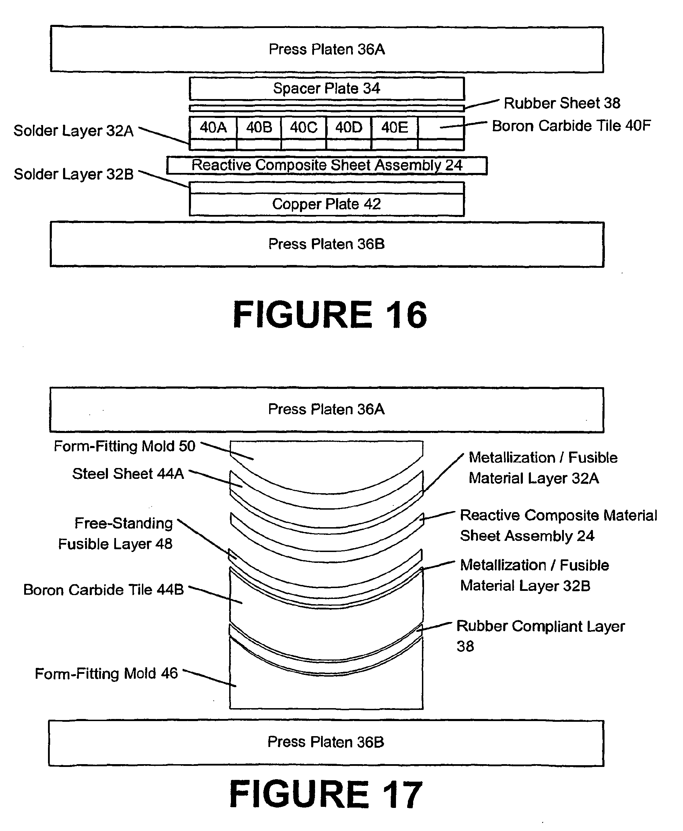

Example 5: In this example, an assembly 24 of RCM sheets 12 was utilized to simultaneously join a set of discrete component tiles 40A-40F to a single base component body 42, as shown schematically in Figure 16. Each of the discrete component tiles 40A-40F is composed of boron carbide (B₄C), and has dimensions of 158.75 mm (6.25 inches) long by 152.4 mm (6 inches) wide, by 6.35 mm (0.25 inches) thick. The single base component body 42 comprises a copper plate having overall dimensions of 16 935 mm (26.25 inches) long by 184.15 mm (7.25 inches) wide by 7.87 mm (0.31) inches thick. The bonding region 26 has a rectangular configuration, with a length of 635 mm (25 inches), width of 152.4 mm (6 inches), and an area of 96 774 mm² (150 sq. inches). Layers of tin-silver solder pre-applied to the copper plate 42 and to each boron carbide tile 40A-40F act as fusible material layers 32A and 32B. Six RCM sheets 12 were pre-assembled into an assembly 24 by taping ten reactive multilayer foil ignition bridges 22 across gaps between the sheets 12 outside of the bonding region 26, as shown in Figure 5, increasing the probability of simultaneous ignition of all the sheets 12. The copper plate 42 was placed on a flat surface with the layer of tin-silver solder 32B facing upwards. The assembly 24 was positioned on top of the copper plate 42 so that it completely covered the bonding region 26. Each boron carbide tile 40A-40F was placed above the assembly 24 in the desired configuration, with the layers of tin-silver solder 32A facing down, in contact with the sheets 12 of the assembly 24. In the present example, the boron carbide tiles 40A-40F were positioned end to end, in contact with each other and aligned with the rectangular bonding region 26, as shown in Figure 16. A compliant layer 38 consisting of a thin layer of hard rubber, matching the configuration of the bonding region 26, was placed above the boron carbide tiles 40A-40F. An aluminum spacer plate 34 was positioned above the compliant layer 38, and aligned with the bonding region 26. The entire arrangement was transferred to a hydraulic press, and a load of 290 000 N (65,250 lbs) was applied to the arrangement by the press platens 36A and 36B. The RCM sheets 12 were ignited electrically, simultaneously at twelve evenly spaced points corresponding to each of the ignition bridges 22 and one at each end of the assembly 24, resulting in a bonding reaction between the copper plate 42 and the boron carbide tiles 40A-40F.

Example 6: In this example, an assembly 24 of RCM sheets 12 was utilized to bond two curved component bodies 44A and 44B over matching non-planar (curved) surfaces, as illustrated in Figure 17. Specifically, a component body 44A comprising a curved sheet of steel having a thickness of 0.381 mm (0.015 inches) was bonded to a component body 44B comprising a curved boron carbide tile. The bonding region was not restricted to a regular shape, and had a surface area of approximately 71 612 mm² (111 sq. inches). Fusible layers 32A and 32B of tin-silver solder were pre-applied to the sheet steel and to the boron carbide tile. Six RCM sheets 12 were pre-assembled into an assembly 24 by taping six reactive multilayer foil ignition bridges 22 across gaps G outside of the irregular curved bonding region 26 and pressing two indium solder tabs across gaps G inside of the bonding region 26. The boron carbide tile was placed on a form-fitting mold 46 with the fusible layer 32B of tin-silver solder facing upwards. The form-fitting mold 46 was lined with a compliant layer 38 of rubber to accommodate surface imperfections. A free-standing fusible layer 48, consisting of a silver-tin-titanium solder (S-Bond® 220) comprising four pieces each 3 inches wide, was positioned over the boron carbide tile 44B. The RCM assembly 24 was then positioned on top of the free-standing fusible layer 48 so that it completely covered the irregular curved bonding region 26. The steel sheet 44A was next placed above the assembly 24 with the fusible layer 32A of tin-silver solder facing down, in contact with the RCM sheets 12. A matching form fitting mold 50 was positioned above the steel sheet 44A, and the entire assembly was transferred to a hydraulic press. A load of 142 000 N (32,000 lbs) was applied to the assembly by the press platens 36A and 36B, and the reactive composite material was ignited electrically, simultaneously at ten points evenly spaced around the peripheral edges of the bonding region 26 to initiate the bonding reaction throughout the curved irregular bonding region.

As various changes could be made in the above constructions and procedures without departing from the scope of the invention.

## Claims

1. A method of bonding a first component body (10A) to at least one additional component body (10B) over a large dimension bonding region, comprising the steps of:
disposing at least one sheet of reactive composite material (12) between the first (10A) component body and each additional component body (10B); and
initiating an exothermic reaction in said sheet of reactive composite material (12), said exothermic reaction resulting in the formation of a bond between said first component body (10A) and said at least one additional component body (10B) over the large dimension bonding region, **characterized in that**
said large dimension bonding region has a surface area greater than the surface area of a single sheet of reactive composite material (12); and wherein
the step of disposing includes disposing a plurality of adjacent sheets of reactive composite material (12) in a contiguous arrangement between the first component body (10A) and each additional component body (10B);
the step of initiating the exothermic reaction further includes initiating the exothermic reaction in each of said plurality of contiguous sheets (12) and wherein said exothermic reaction in a plurality of said contiguous sheets (12) is initiated substantially simultaneously,
wherein contiguous arrangement means that any adjacent edges of the sheets (12) of reactive material are arranged as close together as necessary to form a substantially void-free bond and at least sufficiently close together such that adjacent sheets (12) of reactive material can be operatively connected together into a single assembly.

2. The method of Claim 1 further including the step of applying pressure on said at least one sheet of reactive composite material (12) through the first component body (10A) and each additional component body (10B), said pressure applied prior to and during initiation of said exothermic reaction.

3. The method of Claim 1 further including the step of positioning at least one spacer plate (34) in proximity to a component body prior to applying said pressure, said spacer plate altering void formation during said bond formation.

4. The method of Claim 1 further including the step of disposing a layer of fusible material (14) between said at least one sheet of reactive composite material (12) and said first component body (10A) and/or each of said at least one additional component bodies (10B).

5. The method of Claim 1 further including the step of disposing at least one ignition bridge (22) between said plurality of contiguous sheets of reactive composite material (12), and wherein said ignition bridge (22) conveys an initiated exothermic reaction between said contiguous sheets of reactive composite material (12).

6. The method of Claim 5 wherein said ignition bridges (22) comprise at least one of a reactive composite material, a multilayer wire, a loose mixture of reactive compounds, and a compact mixture of reactive compounds and the method further including the step of securing each of said plurality of adjacent sheets of reactive composite material (12) into an assembly of reactive composite material (24).

7. The method of Claim 6 further including the step of securing at least one structural support tab (20) consisting of a fusible material between said plurality of adjacent sheets of reactive composite material (12).

8. The method of Claim 6 further including the step of bonding contiguous edges of adjacent sheets of reactive composite material (12) to form said assembly.

9. The method of Claim 1 wherein said step of initiating said exothermic reaction in each sheet of reactive composite material (12) includes simultaneously initiating said exothermic reaction at a plurality of ignition points in said each sheet of reactive composite material (12).

10. The method of Claim 9 wherein said exothermic reaction propagates in a substantially symmetrical manner from the outside to the center of said large dimension bonding region.

11. An assembly comprising at least two adjacent sheets of reactive composite material (12) interconnected by at least one coupling means, **characterized in that** said coupling means is a structural support tab (20) consisting of a fusible material.

12. The method of Claim 1 wherein the step of simultaneously initiating the exothermic reaction in said sheet of reactive composite material is achieved at a plurality of ignition points on said sheet.

## Patentansprüche

1. Verfahren zur Verbindung eines Bauteilkörpers (10A) mit mindestens einem weiteren Bauteilkörper (10B) über eine Verbindungsfläche mit großer Abmessung, das folgende Schritte umfasst:
Anordnen von mindestens eines Blatts eines reaktionsfähigen Verbundmaterials (12) zwischen dem ersten Bauteilkörper (10A) und jedem weiteren Bauteilkörper (10B); und
Ausführen einer exothermen Reaktion in besagtem Blatt des reaktionsfähigen Verbundmaterials (12), wobei besagte exotherme Reaktion zu der Bildung einer Verbindung zwischen dem ersten Bauteilkörper (10A) und mindestens einem weiteren Bauteilkörper (10B) über die Verbindungsfläche mit großer Abmessung führt, **dadurch gekennzeichnet, dass**
besagte Verbindungsfläche mit großer Abmessung eine Fläche misst, die größer ist als die Fläche eines einzigen Blatts des reaktionsfähigen Verbundmaterials (12); und wobei
der Schritt des Anordnens das Anordnen einer Vielzahl von angrenzenden Blättern des reaktionsfähigen Verbundmaterials (12) in einer zusammenhängenden Anordnung zwischen dem ersten Bauteilkörper (10A) und jedem weiteren Bauteilkörper (10B) umfasst;
der Schritt des Auslösens der exothermen Reaktion darüber hinaus das Auslösen der exothermen Reaktion in jedem der Vielzahl von zusammenhängenden Blättern (12) umfasst und wobei besagte exotherme Reaktion in einer Vielzahl der zusammenhängenden Blätter (12) im Wesentlichen gleichzeitig ausgelöst wird,
wobei zusammenhängender Anordnung bedeutet, dass jede angrenzende Kante der Lagen (12) des reaktionsfähigen Materials so eng wie nötig angeordnet wird, um eine im Wesentlichen lückenfreie Verbindung zu bilden, und mindestens eng genug angeordnet wird, damit die angrenzenden Blätter (12) des reaktionsfähigen Materials wirksam zu einer einzigen Anordnung miteinander verbunden werden können.

2. Verfahren nach Anspruch 1, das darüber hinaus den Schritt des Anwendens von Druck auf das mindestens eine Blatt des reaktionsfähigen Verbundmaterials (12) durch den ersten Bauteilkörper (10A) und jeden zusätzlichen Bauteilkörper (10B) umfasst, wobei besagter Druck vor und während der Auslösung der exothermen Reaktion angewendet wird.

3. Verfahren nach Anspruch 1, das darüber hinaus den Schritt des Positionierens von mindestens einer Abstandsplatte (34) in der Nähe eines Bauteilkörpers vor Anwendung des besagten Drucks umfasst, wobei besagte Abstandsplatte die Bildung von Lücken während der Erzeugung besagter Verbindungsbildung verändert.

4. Verfahren nach Anspruch 1, das darüber hinaus den Schritt des Anordnens eines Blatts schmelzfähigen Materials (14) zwischen dem mindestens einen Blatt des reaktionsfähigen Materials (12) und dem ersten Bauteilkörper (10A) und/oder jedem des mindestens einen weiteren Bauteilkörpers (10B) umfasst.

5. Verfahren nach Anspruch 1, das darüber hinaus den Schritt des Anordnens mindestens einer Zündbrücke (22) zwischen der besagten Vielzahl der zusammenhängenden Blättern des reaktionsfähigen Verbundmaterials (12) umfasst, wobei die Zündbrücke (22) eine ausgelöste exotherme Reaktion zwischen den zusammenhängenden Blättern des reaktionsfähigen Verbundmaterials (12) weiterleitet.

6. Verfahren nach Anspruch 5, wobei die Zündbrücken (22) mindestens eines von reaktionsfähigem Verbundmaterial, einen mehrlagigen Draht, eine lose Mischung reaktionsfähiger Zusammensetzungen und eine kompakte Mischung einer reaktionsfähigen Zusammensetzung umfassen, und wobei das Verfahren darüber hinaus den Schritt der Sicherung eines jeden angrenzenden Blatts des reaktionsfähigen Verbundmaterials (12) in einen Aufbau von reaktionsfähigem Verbundmaterial (24) umfasst.

7. Verfahren nach Anspruch 6, das darüber hinaus den Schritt des Sicherns von mindestens einem Strukturstützstreifen (20) umfasst, der aus einem schmelzfähigen Material zwischen besagter Vielzahl angrenzender Blätter eines reaktionsfähigen Verbundmaterials (12) besteht.

8. Verfahren nach Anspruch 6, das darüber hinaus den Schritt des Verbindens der zusammenhängenden Kanten der angrenzenden Lagen des reaktionsfähigen Verbundmaterials (12) umfasst, um besagten Aufbau zu bilden.

9. Verfahren nach Anspruch 1, wobei besagter Schritt des Auslösens besagter exothermer Reaktion in jedem Blatt des reaktionsfähigen Verbundmaterials (12) die gleichzeitige Auslösung besagter exothermer Reaktion an einer Vielzahl von Zündpunkten in jedem Blatt des reaktionsfähigen Verbundmaterials (12) umfasst.

10. Verfahren nach Anspruch 9, wobei besagte exotherme Reaktion sich in einer im Wesentlichen symmetrischen Art und Weise von außen zur Mitte der besagten Verbindungsfläche mit großer Abmessung fortsetzt.

11. Eine Anordnung, die mindestens zwei angrenzende Blätter des reaktionsfähigen Materials (12) umfasst, die durch mindestens ein Verbindungsmittel miteinander verbunden sind, **dadurch gekennzeichnet, dass** besagtes Verbindungsmittel ein Strukturstützstreifen (20) ist, der aus schmelzfähigem Material besteht.

12. Verfahren nach Anspruch 1, wobei der Schritt des gleichzeitigen Auslösens der exothermen Reaktion in besagtem Blatt des reaktionsfähigen Verbundmaterials an einer Vielzahl von Zündpunkten in besagtem Blatt erzielt wird.

## Revendications

1. Procédé de collage d'un corps (10A) à titre de premier composant à au moins un corps (10B) à titre de composant supplémentaire sur une zone de collage de grande dimension, comprenant les étapes consistant à :
disposer au moins une feuille d'un matériau composite réactif (12) entre le corps (10A) à titre de premier composant et chaque corps (10B) à titre de composant supplémentaire ; et
déclencher une réaction exothermique dans ladite feuille de matériau composite réactif (12), ladite réaction exothermique donnant lieu à la formation d'une liaison entre ledit corps (10A) à titre de premier composant et ledit au moins un corps (10B) à titre de composant supplémentaire sur la zone de collage de grande dimension, **caractérisé en ce que** :
ladite zone de collage de grande dimension possède une aire de surface supérieure à l'aire de surface d'une feuille unique du matériau composite réactif (12) ; et dans lequel
l'étape de disposition englobe la disposition de plusieurs feuilles adjacentes de matériau composite réactif (12) dans un arrangement contigu entre le corps (10A) à titre de premier composant et chaque corps (10B) à titre de composant supplémentaire ;
l'étape de déclenchement de la réaction exothermique englobe en outre le déclenchement de la réaction exothermique dans lesdites plusieurs feuilles contiguës (12), et dans lequel ladite réaction exothermique dans lesdites plusieurs feuilles contiguës (12) est déclenchée de manière essentiellement simultanée ;
l'arrangement contigu signifiant que n'importe quels bords adjacents des feuilles (12) du matériau réactif sont arrangés pour être aussi proches l'un de l'autre que possible afin d'obtenir une liaison essentiellement exempte de vide et au moins suffisamment proches l'un de l'autre pour pouvoir relier de manière opérante des feuilles adjacentes (12) du matériau réactif les unes aux autres pour obtenir un assemblage unique.

2. Procédé selon la revendication 1, englobant en outre l'étape consistant à appliquer une pression sur ladite au moins une feuille de matériau composite réactif (12) à travers le corps (10A) à titre de premier composant et chaque corps (10B) à titre de composant supplémentaire, ladite pression étant appliquée avant et pendant le déclenchement de ladite réaction exothermique.

3. Procédé selon la revendication 1, englobant en outre l'étape consistant à positionner au moins une plaque d'écartement (34) à proximité d'un corps à titre de composant avant d'appliquer ladite pression, ladite plaque d'écartement modifiant la formation de vide au cours de ladite formation de la liaison.

4. Procédé selon la revendication 1, englobant en outre l'étape consistant à disposer une couche de matériau fusible (14) entre ladite au moins une feuille de matériau composite réactif (12) et ledit corps (10A) à titre de premier composant et/ou chacun desdits corps (10B) à titre de composants supplémentaires.

5. Procédé selon la revendication 1, englobant en outre l'étape consistant à disposer au moins un pont d'inflammation (22) entre lesdites plusieurs feuilles contiguës de matériau composite réactif (12), et dans lequel ledit pont d'inflammation (22) transmet une réaction exothermique déclenchée entre lesdites feuilles contiguës de matériau composite réactif (12).

6. Procédé selon la revendication 5, dans lequel lesdits ponts d'inflammation (22) comprennent au moins un membre choisi parmi le groupe comprenant un matériau composite réactif, un fil métallique multicouche, un mélange lâche de composés réactifs et un mélange compact de composés réactifs, le procédé englobant en outre l'étape consistant à fixer chacune desdites plusieurs feuilles adjacentes de matériau composite réactif (12) pour obtenir un assemblage de matériau composite réactif (24).

7. Procédé selon la revendication 6, englobant en outre l'étape consistant à fixer au moins une patte de support structurelle (20) constituée d'un matériau fusible entre lesdites plusieurs feuilles adjacentes de matériau composite réactif (12).

8. Procédé selon la revendication 6, englobant en outre l'étape consistant à coller les bords continus de feuilles adjacentes de matériau composite réactif (12) pour obtenir ledit assemblage.

9. Procédé selon la revendication 1, dans lequel ladite étape de déclenchement de ladite réaction exothermique dans chaque feuille de matériau composite réactif (12) englobe le déclenchement simultané de ladite réaction exothermique à plusieurs ponts d'inflammation dans chaque feuille en question du matériau composite réactif (12).

10. Procédé selon la revendication 9, dans lequel ladite réaction exothermique se propage d'une manière essentiellement symétrique depuis l'extérieur jusqu'au centre de ladite zone de collage de grande dimension.

11. Assemblage comprenant au moins deux feuilles adjacentes de matériau composite réactif (12) reliées l'une à l'autre par au moins un moyen de couplage, **caractérisé en ce que** ledit moyen de couplage est une patte de support structurelle (20) constituée d'une matière fusible.

12. Procédé selon la revendication 1, dans lequel l'étape consistant à déclencher de manière simultanée la réaction exothermique dans ladite feuille de matériau composite réactif est mise en oeuvre à plusieurs ponts d'inflammation sur ladite feuille.
